# EUROPÄISCHE PATENTANMELDUNG

(11) **EP 3 404 303 A1**
(43) Veröffentlichungstag der Anmeldung: **21.11.2018**
(21) Anmeldenummer: 17405004.7
(22) Anmeldetag: 16.05.2017
(51) Int. Cl.: F16L 13/14, F16L 19/10, F16L 21/00, F16L 33/32

(54) **FITTINGBAUSATZ ZUR HERSTELLUNG EINER PRESSVERBINDUNG MIT EINEM ROHRSTÜCK**

(71) Anmelder: Haelok AG, 8005 Zürich (CH)
(72) Erfinder: Gubler, Roman, CH-8406 Winterthur (CH); Gunzenhauser, Jürg, CH-4450 Sissach (CH); Keeris, Quirin, CH-8400 Winterthur (CH)
(74) Vertreter: Ullrich, Gerhard

(57) **Zusammenfassung**

Der Fittingbausatz (**1**) zur Herstellung einer Pressverbindung mit einem Rohrstück (**9**) umfasst ein Zwischenstück (**2**) zwecks axial eingeführter Aufnahme des Rohrstücks (**9**) und einen Pressring (**3**) zum Aufschieben über das Zwischenstück (**2**) mit der Wirkung des Entstehens einer druckdichten und mechanisch belastbaren Pressverbindung zwischen Rohrstück (**9**) und Zwischenstück (**2**). Das Zwischenstück (**2**) weist ein Ringsegment (**24**) auf, von dem sich axial mit vermindertem Aussendurchmesser ein Fortsatz (**23**) bis zu einer Stirnfläche (**20**) erstreckt. Am Übergang zwischen dem Ringsegment (**24**) und dem Fortsatz (**23**) ist eine Schulterfläche (**26**) ausgebildet. Der Schulterfläche (**26**) gegenüberliegend endet das Ringsegment (**24**) an einer Stützfläche (**27**). Der Pressring (**3**) besitzt ein Kragensegment (**33**), das einerseits an einer Endfläche (**39**) abschliesst und von dem sich andererseits axial mit erweitertem Innendurchmesser ein Zungensegment (**34**) bis an eine Stirnfläche (**30**) erstreckt. Am Übergang zwischen dem Kragensegment (**33**) und dem Zungensegment (**34**) ist eine Prellschulter (**36**) vorhanden. Der Pressring (**3**) besitzt ein Rastelement (**35**), welches im verpressten Zustand zum arretierten Einklinken in eine am Aussenumfang des Zwischenstücks (**2**) vorhandene komplementäre Ausnehmung (**25**) bestimmt ist. Die Ausnehmung (**25**) hat die Form einer Abstufung, die sich von der Stützfläche (**27**) hin zur Schulterfläche (**26**) anteilig erstreckt. Das Rastelement (**35**) ist ein nach innen verdicktes freies Ende des Zungensegments (**34**).

## Beschreibung

### Anwendungsgebiet der Erfindung

Die Erfindung betrifft einen Fittingbausatz zur Herstellung einer Pressverbindung mit einem Rohrstück. Der Fittingbausatz umfasst ein hülsenartiges Zwischenstück, das zur innerlichen, axial eingeführten Aufnahme eines Anschlussendes des Rohrstücks bestimmt ist, und ferner einen Pressring, der zum Aufschieben über das Zwischenstück mit der Wirkung des Entstehens einer druckdichten und mechanisch belastbaren Pressverbindung zwischen dem Anschlussende und dem Zwischenstück vorgesehen ist. Derartige Pressverbindungen lassen sich mit einem Werkzeug effizienter herstellen als Schraub- oder Schweissverbindungen, wobei letztere in kritischer Umgebung bei Feuer- oder Explosionsgefahr sehr problematisch herstellbar sind. Mit entsprechend konfigurierten Zwischenstücken erhält man eine gerade Muffe oder einen Bogenfitting. Auch kann das Zwischenstück z.B. die Gestalt einer Endkappe, eines Press-Schraub-Fittings, eines T-Stücks oder eines Verteilers haben.

### Stand der Technik

Die CH 695 026 A5 offenbart eine druckdichte Pressverbindung, welche die Gestalt einer geraden Muffe mit zwei im Zwischenstück zueinander fluchtend steckenden Rohrstücken hat und mittels zweier Pressringe hergestellt ist. Zur Positionierung der Einschubtiefe der Rohrstücke in das Zwischenstück hat dieses innerlich in axialer Mitte einen Anschlag. Über den mittleren Bereich des Zwischenstücks erstreckt sich ein Ringsegment mit einer zentrisch umlaufenden Nut für den Werkzeugeingriff. Vom Ringsegment abgestuft und mit verringertem Aussendurchmesser erstreckt sich in diametraler Richtung jeweils ein Fortsatz, dessen zwei Krallen im verpressten Zustand in die Oberfläche des betreffenden Rohrstücks eindringen. Die verwendeten Pressringe haben ein innerlich konturiertes Kragensegment, von dem sich ein abgestuftes Zungensegment mit vergrössertem Innendurchmesser erstreckt. Im verpressten Zustand werden beide Fortsätze auf die jeweilige Rohroberfläche gedrückt, die jeweilige Stufe beidseits des Zwischenstücks und die Stufe am zugeordneten Pressring stossen aneinander und die beiden Zungensegmente liegen zueinander gerichtet auf dem Ringsegment auf, wobei die Nut frei bleibt.

Sehr ähnliche Pressverbindungen sind Gegenstand der EP 2 921 755 B1 und der US 5,114,191. Der wesentliche Unterschied zur CH 695 026 A5 besteht darin, dass die jeweiligen Pressringe kein das Ringsegment des Zwischenstücks partiell übergreifendes Zungensegment haben. Bei der EP 2 921 755 B1 ist der mittlere Bereich des Ringsegments des Zwischenstücks zweifach abgestuft, wobei die äussere Abstufung dem Werkzeugeingriff dient. Die US 5,114,191 weist innerlich der beiden, sich diametral erstreckenden Fixierteile des Zwischenstücks verschieden konfigurierte und positionierte Krallen - u.a. eine etwa mittig jedes Fixierteils angeordnete Doppelkralle - auf, die im verpressten Zustand zum Eindringen in die Oberfläche der in das Zwischenstück eingeführten Rohrstücke bestimmt sind.

Die US 2013/0 270 821 A1 schliesslich zeigt eine weitere Pressverbindung, deren spezifisches Merkmal darin besteht, dass die eingesetzten Pressringe ein innerlich konturiertes Kragensegment besitzen, von dem sich ein Rastelement erstreckt, welches einen vergrösserten Innendurchmesser mit unebener Unterseite hat. Komplementär zum Rastelement haben die beiden Ringsegmente auf der Seite ihrer dem aufzuschiebenden Pressring zugewandten Schulterflächen jeweils eine Aussparung. Im verpressten Zustand stossen die jeweils zueinander gehörigen Schulterflächen am Zwischenstück mit den Prellschultern an den Pressringen aneinander und die Rastelemente sind in die Aussparungen eingeklinkt. Aufgrund der am Montageort - z.B. an Pipelines - zumeist herrschenden rauen Verhältnisse besteht bei dieser Konstruktion ein nicht unwesentliches Risiko des Einschlusses von Schmutzpartikeln in den von den Ratselementen belegten Aussparungen, was der Güte der Pressverbindung abträglich ist.

### Aufgabe der Erfindung

In Weiterentwicklung des vorbekannten Standes der Technik ist es Aufgabe der Erfindung, auch für grössere Fittingdimensionen, höhere Drücke und stärkere Belastungen - wie Zug, Schub und Vibration -, die Dichtheit und Festigkeit von Pressverbindungen des gattungsmässigen Typs zu verbessern, also auch unter den oftmals rauen Montagebedingungen den Einschluss von Schmutzpartikeln in die fertige Pressverbindung zu vermeiden.

### Übersicht über die Erfindung

Der zur Herstellung einer Pressverbindung mit einem Rohrstück konzipierte Fittingbausatz besteht aus einem hülsenartigen Zwischenstück, das zur innerlichen, axial eingeführten Aufnahme eines Anschlussendes des Rohrstücks bestimmt ist, und einem Pressring, der zum Aufschieben über das Zwischenstück mit der Wirkung des Entstehens einer druckdichten und mechanisch belastbaren Pressverbindung zwischen dem Anschlussende und dem Zwischenstück vorgesehen ist. Das Zwischenstück weist ein Ringsegment auf, von dem sich axial mit vermindertem Aussendurchmesser ein Fortsatz bis zu einer Stirnfläche erstreckt. Am Übergang zwischen dem Ringsegment und dem Fortsatz ist eine Schulterfläche ausgebildet. Der Schulterfläche gegenüberliegend endet das Ringsegment an einer Stützfläche. Der Pressring besitzt ein Kragensegment, das einerseits an einer Endfläche abschliesst und von dem sich andererseits axial mit erweitertem Innendurchmesser ein Zungensegment bis an eine Stirnfläche erstreckt. Am Übergang zwischen dem Kragensegment und dem Zungensegment ist eine Prellschulter angeordnet. Das Ringsegment besitzt an seinem Aussenumfang eine Ausnehmung, und das Zungensegment hat ein zum arretierten Einklinken in die Ausnehmung komplementäres Rastelement. Die Ausnehmung ist als Abstufung ausgebildet, die sich von der Stützfläche hin zur Schulterfläche anteilig erstreckt. Das Rastelement ist als sich nach innen des Pressrings verdicktes freies Ende des Zungensegments beschaffen.

Nachstehend sind besonders vorteilhafte Details zum erfindungsgemässen Fittingbausatz genannt: Der Fortsatz weist eine zirkulär umlaufende Doppelkralle auf, die sich von einer Innenfläche des Zwischenstücks erhebt und zwischen der Schulterfläche und der Stirnfläche liegt. Der Fortsatz besitzt in Bereich der Doppelkralle eine nach aussen gewölbte Wulst. Angrenzend an die Stirnfläche des Fortsatzes ist eine zirkulär umlaufende, in das Innere des Zwischenstücks gerichtete Endkralle vorhanden.

Das Kragensegment hat im Inneren des Pressrings eine Konturfläche, die von der Endfläche hin zur Prellschulter mit abfallend erweitertem Innendurchmesser ausgebildet ist. Innerlich des Zwischenstücks befindet sich ein Anschlag, der zur Begrenzung der vorgesehenen Einschubtiefe des Anschlussendes des Rohrstücks in das Zwischenstück dient, bei welcher eine am Rohrstück endende Stossfläche am Anschlag ansteht.

Am Zwischenstück ist der Bereich von der Stützfläche, entlang der eine Grenzlinie verläuft, bis zur Stirnfläche als Fixierteil definiert. Von der Grenzlinie schliesst sich an das Fixierteil ein Sekundärteil an, wodurch das Zwischenstück z.B. die Gestalt einer Endkappe, eines Press-Schraub-Fittings, eines T-Stücks oder eines Verteilers erhält. Schliesst sich an das Sekundärteil ein weiteres Fixierteil an, erhält somit das Zwischenstück z.B. die Gestalt einer geraden Muffe oder eines Bogenfittings.

Der Anschlag ist im Bereich des Sekundärteils angeordnet. Die Stützfläche des Zwischenstücks und die Endfläche des Pressrings sind zum Ansetzen eines Presswerkzeugs nutzbar, zwecks Aufschiebens des Pressrings auf das Fixierteil des Zwischenstücks, in dem das Anschlussende des Rohrstücks steckt, so dass die Pressverbindung zwischen dem Fittingbausatz und dem Rohrstück entsteht.

Im ordnungsgemäss verpressten Zustand zwischen dem Fittingbausatz, bestehend aus dem Zwischenstück und dem Pressring, mit dem Rohrstück:
- greift das Rastelement formschlüssig arretiert in die Ausnehmung ein;
- das Kragensegment mit seiner Konturfläche bewirkt das Aufliegen des Fortsatzes des Zwischenstücks auf der Aussenfläche des Rohrstücks und das Eindringen von Doppelkralle und Endkralle in die Aussenfläche des Rohrstücks;
- kommen die Schulterfläche und die Prellschulter aneinander zu liegen; und
- steht die Stossfläche des Rohrstücks am Anschlag an.

Der Fittingbausatz lässt sich vormontiert bereitstellen, wobei der Pressring soweit auf das Zwischenstück aufgeschoben ist, dass das Rastelement zumindest partiell auf der Aussenfläche des Ringsegments und mit Abstand zur Ausnehmung aufsitzt.

### Kurzbeschreibung der beigefügten Zeichnungen

Es zeigen:

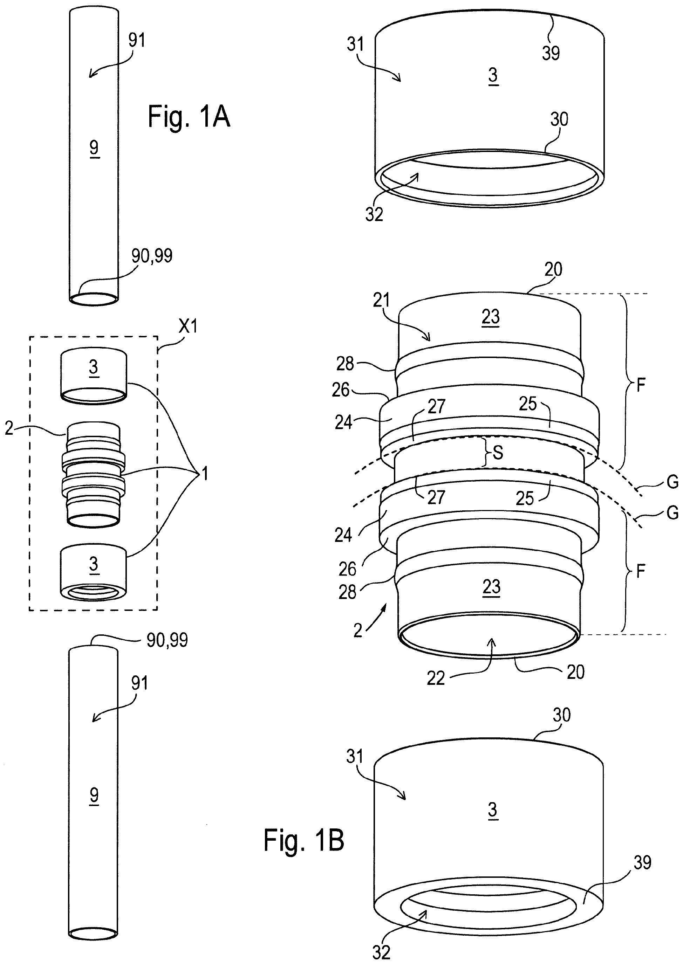

- Figur 1A -: als *erste Variante* einen Fittingbausatz, bestehend aus einem Zwischenstück - in Gestalt einer geraden Muffe - und zwei Pressringen, mit zwei zugeordneten Rohrstücken, in perspektivischer Explosivdarstellung;
- Figur 1B -: das vergrösserte Detail X1 aus Figur 1A;

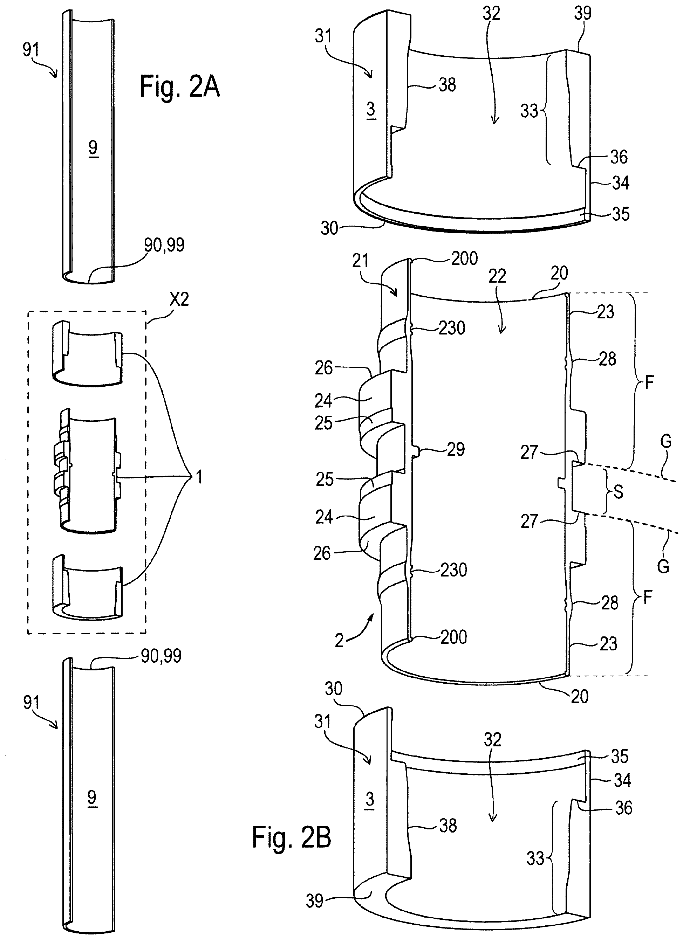

- Figur 2A -: die Anordnung gemäss Figur 1A, im perspektivischen Vertikalschnitt;
- Figur 2B -: das vergrösserte Detail X2 aus Figur 2A;

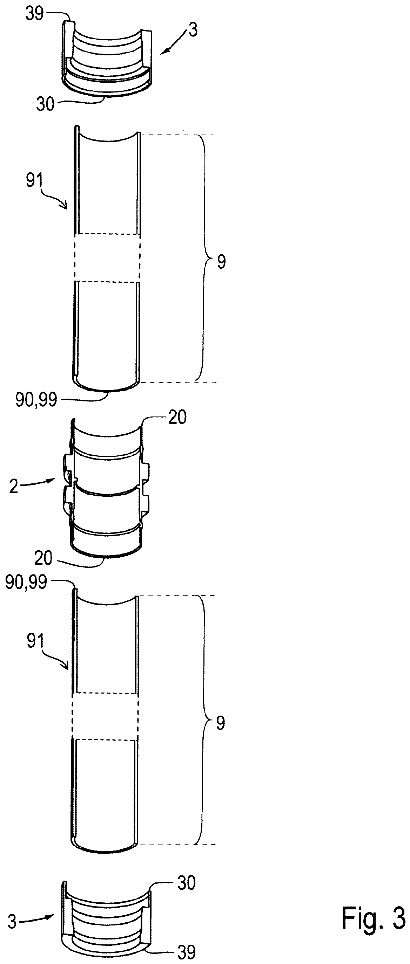

- Figur 3 -: die Anordnung gemäss Figur 2A, mit je einem Pressring den äusseren Enden der Rohrstücke zugewandt, im perspektivischen Vertikalschnitt;

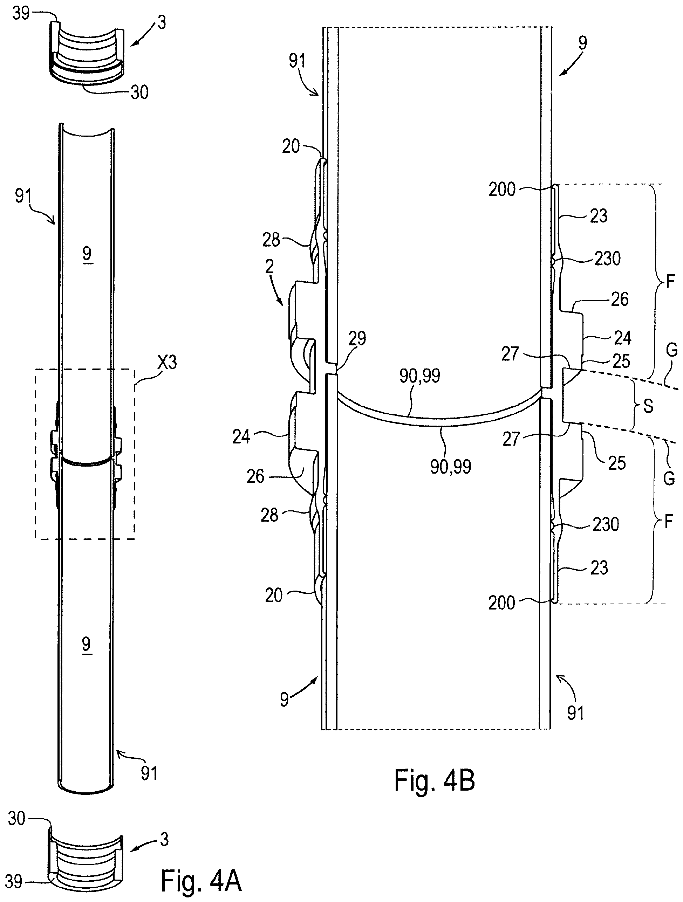

- Figur 4A -: die Anordnung gemäss Figur 3, mit den beiden Rohrstücken jeweils mit ihrer Stossfläche bis an den innerlich des Zwischenstücks vorhandenen Anschlag eingeschoben, im perspektivischen Vertikalschnitt;
- Figur 4B -: das vergrösserte Detail X3 aus Figur 4A;

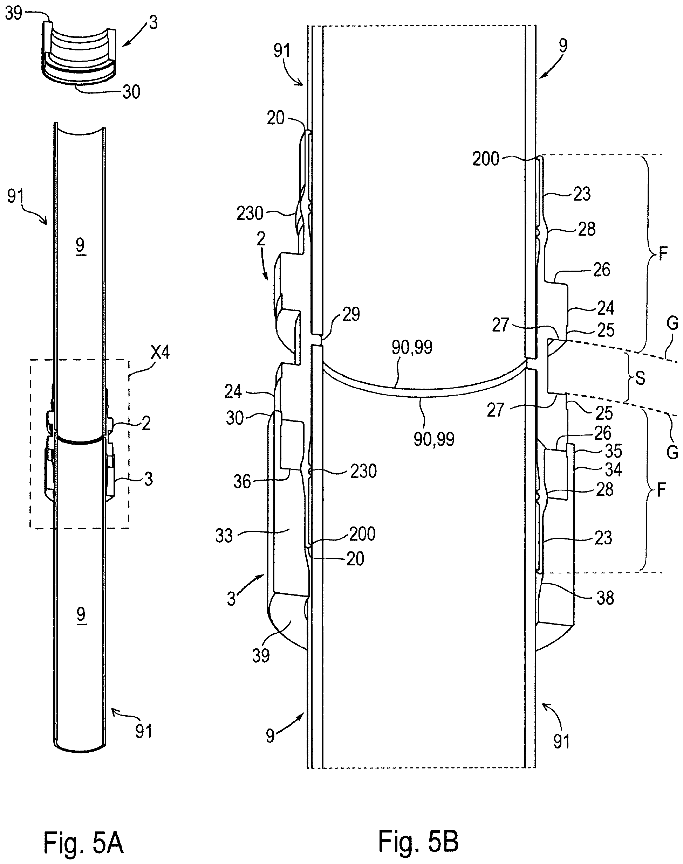

- Figur 5A -: die Anordnung gemäss Figur 4A, mit einem Pressring über das zugeordnete Rohrstück partiell auf das zugewandte Fixierteil des Zwischenstücks aufgeschoben, im perspektivischen Vertikalschnitt;
- Figur 5B -: das vergrösserte Detail X4 aus Figur 5A;
- Figur 6A -: die Anordnung gemäss Figur 5A, mit dem Pressring auf das betreffende Fixierteil vollständig aufgeschoben, als mit dem Rohrstück fertig verpresster Zustand, im perspektivischen Vertikalschnitt;
- Figur 6B -: das vergrösserte Detail X5 aus Figur 6A;

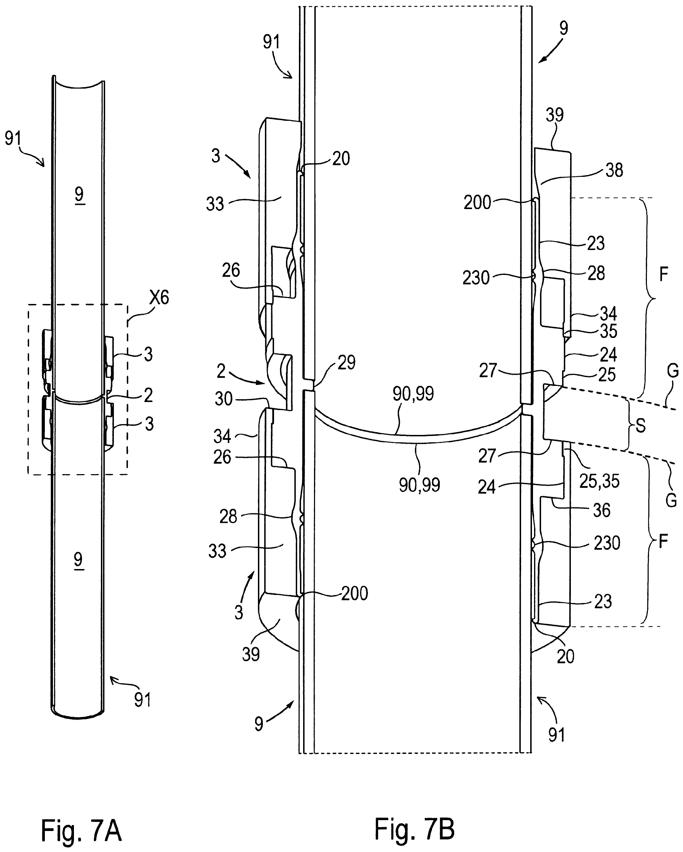

- Figur 7A -: die Anordnung gemäss Figur 6A, mit dem zweiten Pressring über das zweite Rohrstück partiell auf das zugewandte andere Fixierteil des Zwischenstücks aufgeschoben, im perspektivischen Vertikalschnitt;
- Figur 7B -: das vergrösserte Detail X6 aus Figur 7A;

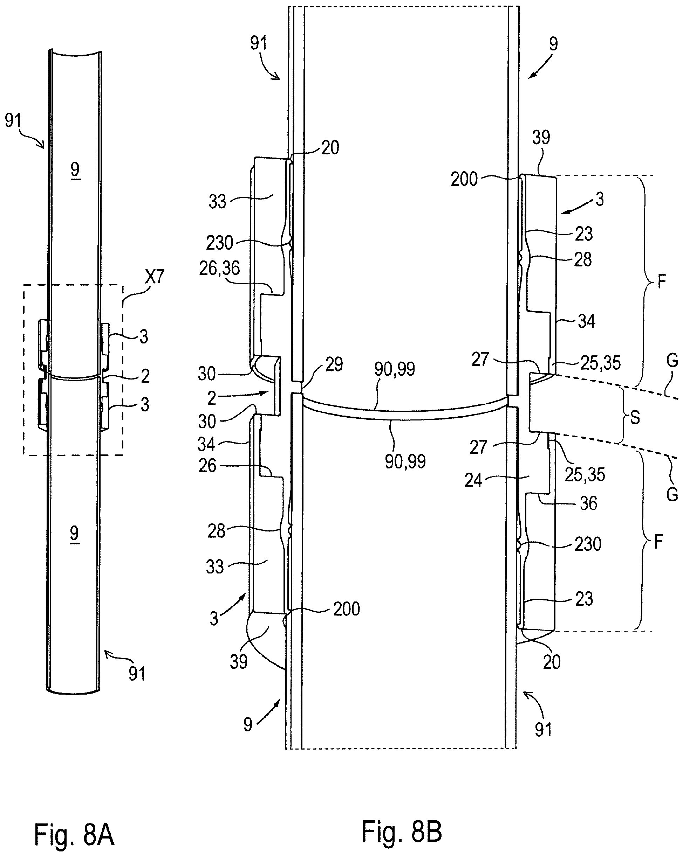

- Figur 8A -: die Anordnung gemäss Figur 7A, mit dem zweiten Pressring auf das andere Fixierteil des Zwischenstücks vollständig aufgeschoben, als fertig verpresste gerade Muffenverbindung, im perspektivischen Vertikalschnitt;
- Figur 8B -: das vergrösserte Detail X7 aus Figur 8A;

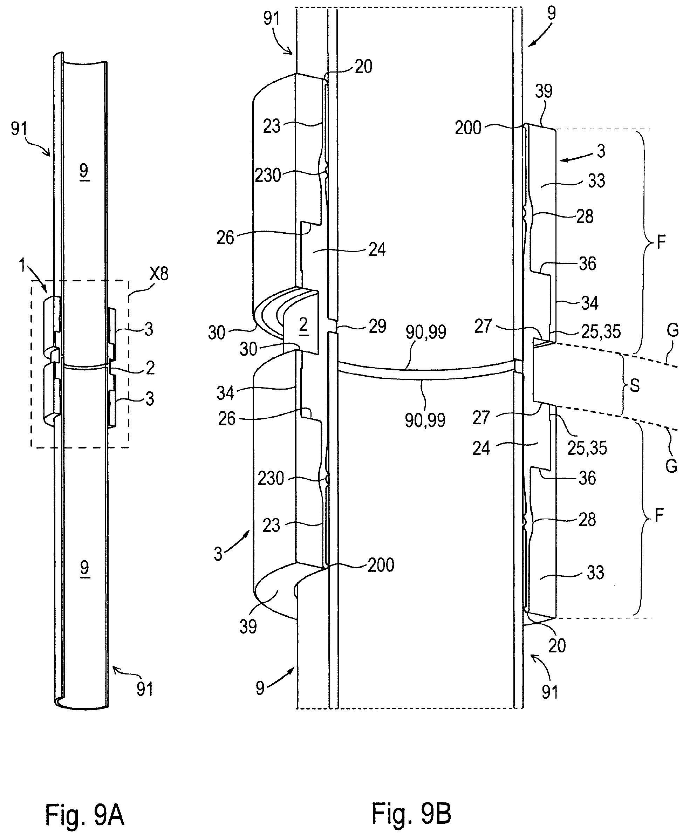

- Figur 9A -: die Anordnung gemäss Figur 8A, im veränderten perspektivischen Vertikalschnitt;
- Figur 9B -: das vergrösserte Detail X8 aus Figur 9A;
- Figur 10 -: als *zweite Variante* einen Fittingbausatz, bestehend aus einem Zwischenstück - in Gestalt einer Endkappe - und einem Pressring, mit einem Rohrstück, als fertig verpresster Rohrverschluss, im perspektivischen Vertikalschnitt; und

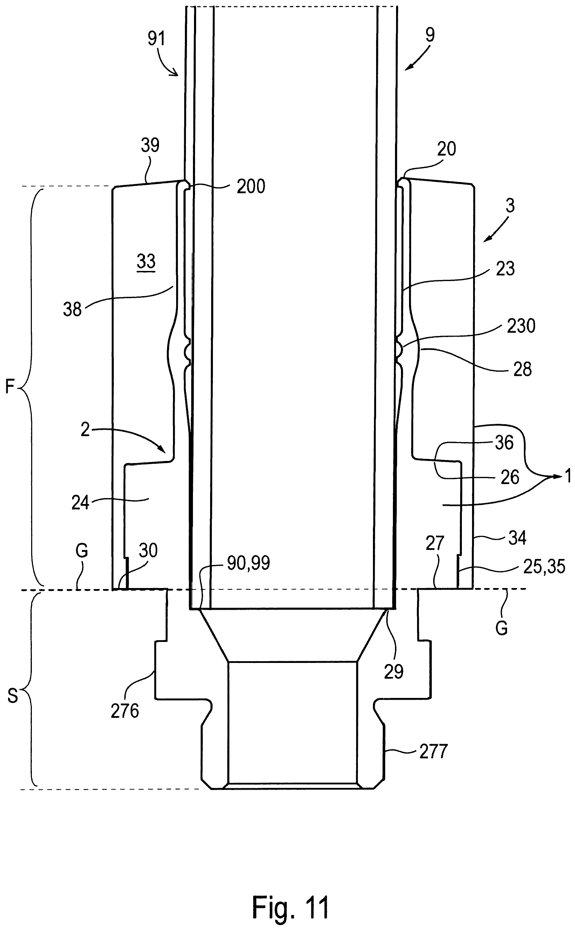

- Figur 11 -: als *dritte Variante* einen Fittingbausatz, bestehend aus einem Zwischenstück - in Gestalt eines Press-Schraub-Fittings - und einem Pressring, mit einem Rohrstück, als fertig verpresster Schraubanschluss, im Vertikalschnitt.

### Ausführungsbeispiel

Mit Bezug auf die beiliegenden Zeichnungen erfolgt nachstehend die detaillierte Beschreibung eines Ausführungsbeispiels zum geschaffenen erfindungsgemässen Fittingbausatz mit drei Varianten damit hergestellter Rohrverbindungen.

Für die gesamte weitere Beschreibung gilt folgende Festlegung. Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A bis 3

Dargestellter Fittingbausatz **1** *erster Variante* besteht aus einem Zwischenstück **2** in Gestalt einer geraden Muffe und zwei Pressringen **3,** um damit eine Verbindung zwischen zwei Rohrstücken **9** herzustellen. Jedes der Rohrstücke **9** besitzt seine Aussenfläche **91** und hat ein dem Fittingbausatz **1** zuzuwendendes Anschlussende **99,** das mit der Stossfläche **90** abschliesst und sich von hier über eine gewählte Länge erstreckt.

Das hülsenartige Zwischenstück **2** besitzt eine mehrfach stark konturierte Aussenfläche **21** und eine weniger stark konturierte Innenfläche **22.** Mittig am Zwischenstück **2** wird ein Sekundärteil **S** definiert, welches die Form eines radial umlaufenden Einstichs hat und sich beidseits jeweils bis zu einer Grenzlinie **G** erstreckt. An jede der beiden Grenzlinien **G** schliesst sich ein Fixierteil **F** an, welches mit einem im Aussendurchmesser verdickten Ringsegment **24** beginnt, an das sich ein im Aussendurchmesser verringerter Fortsatz **23** bis zur Stirnfläche **20** anschliesst. Das Ringsegment **24** ist zur Grenzlinie **G** hin von einer Stützfläche **27** und zum Fixierteil **F** hin von einer Schulterfläche **26** begrenzt. Stützfläche **27** und Schulterfläche **26** treffen zumindest im Prinzip senkrecht auf das Sekundärteil **S.** An seinem Aussenumfang hat das Ringsegment **24** eine als Abstufung ausgebildete Ausnehmung **25,** die sich anteilig von der Stützfläche **27** hin zur Schulterfläche **26** erstreckt. Etwa mittig auf der Längserstreckung wölbt sich vom Fortsatz **23** nach aussen eine Wulst **28.** An seiner Innenfläche **22** weist dieses Zwischenstück **2** jeweils benachbart zur Stirnfläche **20** eine nach innen gerichtete Endkralle **200** auf und zur Wulst **28** gegenüberliegend eine Doppelkralle **230.**

Die Doppelkralle **230** setzt sich aus zwei dicht nebeneinander liegenden Zahnkonturen zusammen. Mittig des Sekundärteils **S** erhebt sich von der Innenfläche **22** ein simsförmiger Anschlag **29,** den man bei einer sogenannten Schiebemuffe nicht vorsieht.

Vorzugsweise besteht das Zwischenstück **2** aus Edelstahl. Schliessen sich an das Sekundärteil **S** zwei Fixierteile **F** an, so kann das Zwischenstück **2** neben der Gestalt einer geraden Muffe auch als Bogenfitting ausgebildet sein. Weist das Zwischenstück **2** hingegen nur ein Fixierteil **F** auf, entsteht ein Zwischenstück **2** in Gestalt einer Endkappe oder eines Press-Schraub-Fittings. In abgewandelter Anordnung lassen sich aus Sekundärteilen **S** und Fixierteilen F z.B. auch T-Stücke oder Verteiler bilden.

Der Pressring **3** besitzt eine glatte zylindrische Aussenfläche **31** sowie eine mehrfach deutlich konturierte Innenfläche **32.** Das sich zum Inneren des Pressrings **3** wandungsstark beschaffene Kragensegment **33** schliesst einerseits an einer Endfläche **39** und andererseits an der intern gelegenen Prellschulter **36** ab. Vom Kragensegment **33** setzt sich axial mit erweitertem Innendurchmesser ein Zungensegment **34** bis an eine Stirnfläche **30** fort. Ein Rastelement **35** ist als sich nach innen des Pressrings **3** verdicktes freies Ende des Zungensegments **34** beschaffen. Die Prellschulter **36** liegt am Übergang zwischen dem Kragensegment **33** und dem Zungensegment **34.** Das Kragensegment **33** hat im Inneren des Pressrings **3** eine Konturfläche **38,** die von der Endfläche **39** hin zur Prellschulter **36** mit abfallend erweitertem Innendurchmesser ausgebildet ist. Vorzugsweise bestehen auch die Pressringe aus Edelstahl.

### Figuren 4A und 4B

Zur Herstellung der verpressten Rohrverbindung mittels des Fittingbausatzes **1** - bestehend aus dem Zwischenstück **2** und zwei Pressringen **3 -** und zwei Rohrstücken **9**, werden diese in einem ersten Montageschritt mit ihrem jeweiligen Anschlussende **99** axial in das Zwischenstück **2** eingeführt bis die Stossflächen **90** am Anschlag **29** anstehen. Somit übergreifen die Fixierteile **F** einen jeweiligen Abschnitt der Aussenflächen **91** der Rohrstücke **9**. Die Endkrallen **200** und Doppelkrallen **230** sitzen noch ohne Eindringen in die Aussenflächen **91** auf diesen auf. Vorteilhaft ist zumeist die Verarbeitung beider Rohrstücke **9** von Anbeginn bei der Herstellung der Pressverbindung. Je nach Gegebenheiten könnte man zunächst auch mit dem Einschieben und Weiterverarbeiten nur eines der Rohrstücke **9** beginnen. Besonders effizient erfolgt die Herstellung der Pressverbindung mit der Bereitstellung eines bereits vormontierten Fittingbausatzes **1** (siehe nächstes Figurenpaar).

### Figuren 5A und 5B

Steht ein vormontierter Fittingbausatz **1** zur Verfügung, ist je ein Pressring **3** bereits von beiden Seiten soweit auf das Zwischenstück **2** aufgeschoben, dass das Rastelement **35** zumindest partiell auf der Aussenfläche des Ringsegments **24** und mit Abstand zur Ausnehmung **25** aufsitzt. Ansonsten muss man je nach Gegebenheiten den ersten Pressring **3** selbst vor dem Einschieben des ersten Rohrstücks **9** in das Zwischenstück **2** oder nach diesem Schritt über das bereits eingeschobene Rohrstück **9** und das zugewandte Fixierteil **F** des Zwischenstücks **2** von Hand aufschieben, vorzugsweise bis das Rastelement **35** ansatzweise auf das Ringsegment **24** aufgefahren ist.

### Figuren 6A und 6B

Im Anschluss an die vorherige Situation erfolgt das Verpressen des Pressrings **3** mit dem Zwischenstück **2** und zugehörigem Rohrstück **9.** Aufgrund der notwendig aufzubringenden Kräfte wird üblich hierzu ein Presswerkzeug verwendet, welches einerseits an der ein Widerlager bildenden Stützfläche **27** ansetzt und andererseits die Endfläche **39** des Pressrings **3** hintergreift, um den Pressring **3** in seine bestimmungsgemässe Endstellung vorschubartig zu drücken. Danach hat sich das Rastelement **35** in der Ausnehmung **25** eingeklinkt und die Endkralle **200** sowie die Doppelkralle **230** wurden in die Aussenfläche **91** des Rohrstücks **9** eingedrückt, wodurch eine druckdichte und mechanisch gesicherte Pressverbindung entstanden ist. Ausserdem ist die übrige Innenfläche **22** des Fortsatzes **23** des Zwischenstücks **2** durch das darüber gefahrene Kragensegment **33** mit seiner Konturfläche **38** auf die darunterliegende Aussenfläche **91** des Rohrstücks **9** aufgepresst.

### Figuren 7A und 7B

Der Vorgang des Verpressens des zweiten Pressrings **3** mit dem Zwischenstück **2** und zugehörigem zweiten Rohrstücks **9** startet und verläuft in äquivalenter Weise, wie beim ersten Pressring **3** und ersten Rohrstück **9** gemäss Figurenpaar 5A,5B. Beim Start kann man entweder von einem vormontierten Fittingbausatz **1** ausgehen oder der zweite Pressring **3** muss vor dem Pressvorgang in die Anfangsposition geschoben werden. Das Presswerkzeug wird nun an der zweiten Stützfläche **27** ansetzt und hintergreift zugleich die Endfläche **39** des zweiten Pressrings **3**.

### Figuren 8A bis 9B

Nach ordnungsgemässem Abschluss des Verpressens auch des zweiten Pressrings **3** mit dem Zwischenstück **2** und dem zugeordneten zweiten Rohrstück **9** ergibt sich dafür der äquivalente Zustand wie beim Figurenpaar 6A,6B mit dem Formschluss des in der zweiten Ausnehmung **25** des Zwischenstücks **2** eingeklinkten Rastelements **35** des zweiten Pressrings **3** und der in der Aussenfläche **91** des zweiten Rohrstücks **9** eingedrungenen Endkralle **200** und Doppelkralle **230** des zweiten Fortsatzes **23**. Mit Verwendung des Fittingbausatzes **1** - hier beispielhaft umfassend ein Zwischenstück **2** in Gestalt einer geraden Muffe und zwei Pressringen **3 -** erhält man eine druckdichte und mechanisch gesicherte Pressverbindung zwischen zwei Rohrstücken **9.**

### Figur 10

Bei der *zweiten Variante* des Fittingbausatzes **1** sind ein Zwischenstück **2 -** nun in Gestalt einer Endkappe - und nur ein unveränderter Pressring **3** vorhanden, mittels derer sich ein Blindverschluss am im Zwischenstück **2** verpressten Rohrstück **9** herstellen lässt. Dieses Zwischenstück **2** besitzt wiederum den an der Stirnfläche **20** frei endenden Fortsatz **23** mit der Endkralle **200,** der Doppelkralle **230** und der Wulst **28** sowie das Ringsegment **24,** welches sich zwischen der Schulterfläche **26** und der an der Grenzlinie **G** verlaufenden Stützfläche **27** erstreckt. Das sich an das Ringsegment **24** einstückig an das Fixierteil **F** - nämlich an der Grenzlinie **G** - anschliessende Sekundärteil **S** ist jetzt als deckelartiges, U-förmiges Blindstück **270** mit dem das Zwischenstück **2** benachbart zum Ringsegment **24** verschliessenden Boden **271** ausgebildet. Das ganze Zwischenstück **2** erhält dadurch eine Becherform mit dem Boden **271** und dem Ringsegment **24** mit anschliessendem Fortsatz **23** als Seitenwandung. Die Innenseite des Bodens **271** dient als Anschlag **29** für das in das Zwischenstück **2** eingeschobene Anschlussende **99** des Rohrstücks **9,** dessen Stossfläche **90** am Anschlag **29** steht.

Nach ordnungsgemässer Verpressung des Pressrings **3** mit dem abgewandelten Zwischenstück **2** und dem eingesteckten Rohrstück **9** ergibt sich wiederum eine Verbindung gemäss dem Prinzip wie beim Figurenpaar 6A,6B. Das Rastelement **35** ist in der Ausnehmung **25** eingeklinkt, die Endkralle **200** und Doppelkralle **230** sind in die Aussenfläche **91** des Rohrstücks **9** eingedrungen und Innenfläche **22** des Fortsatzes **23** ist auf die Aussenfläche **91** des Rohrstücks **9** aufgepresst. Mit Verwendung dieses Fittingbausatzes **1** erhält man eine druckdichte und mechanisch gesicherte Pressverbindung zum Blindverschluss eines Rohrstücks **9.**

### Figur 11

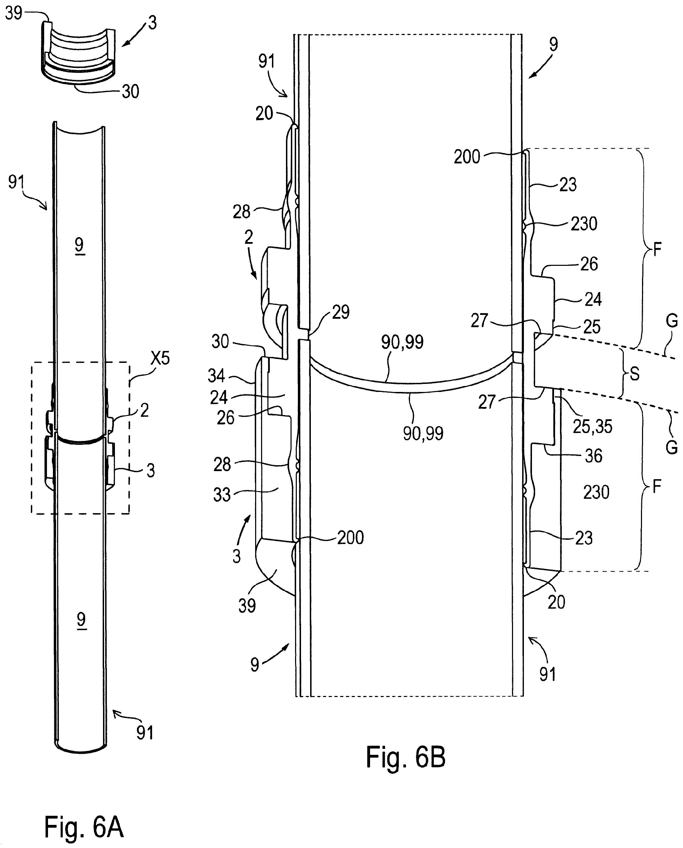

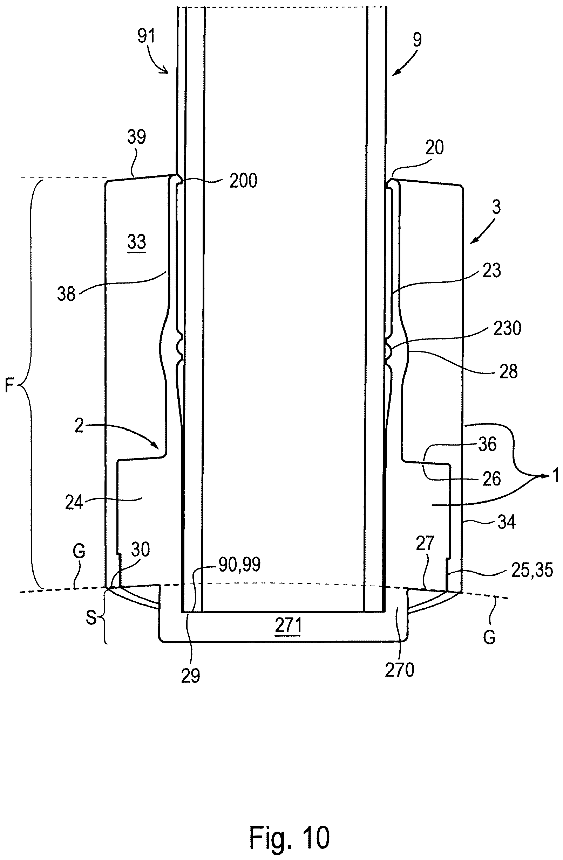

Bei der *dritten Variante* des Fittingbausatzes **1** werden ein Zwischenstück **2 -** nun in Gestalt eines Press-Schraub-Fittings - und ein unveränderter Pressring **3** verwendet, mittels derer sich ein Schraubanschluss am im Zwischenstück **2** verpressten Rohrstück **9** herstellen lässt. Über die Erstreckung des Fixierteils F besitzt das Zwischenstück **2** alle identischen Merkmale der beiden Vorgängervarianten. Das sich an das Ringsegment **24** einstückig an das Fixierteil **F** - nämlich an der Grenzlinie **G** - anschliessende Sekundärteil **S** ist nun als Formstück **276** mit dem Gewindeabschnitt **277**, z.B. ein Aussengewinde, beschaffen. Eine im Formstück **276** vorhandene interne Ringschulter bildet den Anschlag **29** für das in das Zwischenstück **2** eingeschobene Anschlussende **99** des Rohrstücks **9**, dessen Stossfläche **90** am Anschlag **29** ansteht. Nach ordnungsgemässer Verpressung des Pressrings **3** mit diesem speziellen Zwischenstück **2** und dem eingesteckten Rohrstück **9** erhält man erneut die Verbindung gemäss dem Prinzip wie bei Figuren 6A,6B,10. Bei Verwendung dieses Fittingbausatzes **1** lässt sich eine druckdichte und mechanisch gesicherte Pressverbindung mit einem Gewindeanschluss am Rohrstück **9** herstellen.

## Patentansprüche

1. Fittingbausatz (**1**) zur Herstellung einer Pressverbindung mit einem Rohrstück (**9**), bestehend aus einem hülsenartigen Zwischenstück (**2**), das zur innerlichen, axial eingeführten Aufnahme eines Anschlussendes (**99**) des Rohrstücks (**9**) bestimmt ist, und einem Pressring (**3**), der zum Aufschieben über das Zwischenstück (**2**) mit der Wirkung des Entstehens einer druckdichten und mechanisch belastbaren Pressverbindung zwischen dem Anschlussende (**99**) und dem Zwischenstück (**2**) vorgesehen ist, wobei:
a) das Zwischenstück (**2**) ein Ringsegment (**24**) aufweist, von dem sich axial mit vermindertem Aussendurchmesser ein Fortsatz (**23**) bis zu einer Stirnfläche (**20**) erstreckt;
b) am Übergang zwischen dem Ringsegment (**24**) und dem Fortsatz (**23**) eine Schulterfläche (**26**) ausgebildet ist;
c) der Schulterfläche (**26**) gegenüberliegend das Ringsegment (**24**) an einer Stützfläche (**27**) endet;
d) der Pressring (**3**) ein Kragensegment (**33**) besitzt, das einerseits an einer Endfläche (**39**) abschliesst und von dem sich andererseits axial mit erweitertem Innendurchmesser ein Zungensegment (**34**) bis an eine Stirnfläche (**30**) erstreckt;
e) am Übergang zwischen dem Kragensegment (**33**) und dem Zungensegment (**34**) eine Prellschulter (**36**) angeordnet ist, **dadurch gekennzeichnet, dass**
f) das Ringsegment (**24**) an seinem Aussenumfang eine Ausnehmung (**25**) besitzt und das Zungensegment (**34**) ein zum arretierten Einklinken in die Ausnehmung (**25**) komplementäres Rastelement (**35**) hat;
g) die Ausnehmung (**25**) als Abstufung ausgebildet ist, die sich von der Stützfläche (**27**) hin zur Schulterfläche (**26**) anteilig erstreckt; und
h) das Rastelement (**35**) als sich nach innen des Pressrings (**3**) verdicktes freies Ende des Zungensegments (**34**) beschaffen ist.

2. Fittingbausatz (**1**) nach Ansprch 1, **dadurch gekennzeichnet, dass** der Fortsatz (**23**) eine zirkulär umlaufende Doppelkralle (**230**) aufweist, die sich von einer Innenfläche (**22**) des Zwischenstücks (**2**) erhebt und zwischen der Schulterfläche (**26**) und der Stirnfläche (**20**) liegt.

3. Fittingbausatz (**1**) nach Anspruch 2, **dadurch gekennzeichnet, dass**
a) der Fortsatz (**23**) in Bereich der Doppelkralle (**230**) eine nach aussen gewölbte Wulst (**28**) besitzt; und
b) angrenzend an die Stirnfläche (**20**) des Fortsatzes (**23**) eine zirkulär umlaufende, in das Innere des Zwischenstücks (**2**) gerichtete Endkralle (**200**) vorhanden ist.

4. Fittingbausatz (**1**) nach zumindest einem der Ansprüche 1 bis 3, **dadurch gekennzeichnet, dass** das Kragensegment (**33**) im Inneren des Pressrings (**3**) eine Konturfläche (**38**) hat, die von der Endfläche (**39**) hin zur Prellschulter (**36**) mit abfallend erweitertem Innendurchmesser ausgebildet ist.

5. Fittingbausatz (**1**) nach zumindest einem der Ansprüche 1 bis 4, **dadurch gekennzeichnet, dass** sich innerlich des Zwischenstücks (**2**) ein Anschlag (**29**) befindet, der zur Begrenzung der vorgesehenen Einschubtiefe des Anschlussendes (**99**) des Rohrstücks (**9**) in das Zwischenstück (**2**) dient, bei welcher eine am Rohrstück (**9**) endende Stossfläche (**90**) am Anschlag (**29**) ansteht.

6. Fittingbausatz (**1**) nach zumindest einem der Ansprüche 1 bis 5, **dadurch gekennzeichnet, dass**
a) am Zwischenstück (**2**) der Bereich von der Stützfläche (**27**), entlang der eine Grenzlinie (**G**) verläuft, bis zur Stirnfläche (**20**) als Fixierteil (**F**) definiert ist; und
b) sich von der Grenzlinie (**G**) an das Fixierteil (**F**) ein Sekundärteil (**S**) anschliesst, und somit das Zwischenstück (**2**) z.B. die Gestalt einer Endkappe, eines Press-Schraub-Fittings, eines T-Stücks oder eines Verteilers erhält.

7. Fittingbausatz (**1**) nach Anspruch 6, **dadurch gekennzeichnet, dass** sich an das Sekundärteil (**S**) ein weiteres Fixierteil (**F**) anschliesst und somit das Zwischenstück (**2**) z.B. die Gestalt einer geraden Muffe oder eines Bogenfittings erhält.

8. Fittingbausatz (**1**) nach Anspruch 5 und einem der Ansprüche 6 oder 7, **dadurch gekennzeichnet, dass**
a) der Anschlag (**29**) im Bereich des Sekundärteils (**S**) angeordnet ist; und
b) die Stützfläche (**27**) des Zwischenstücks (**2**) und die Endfläche (**39**) des Pressrings (**3**) zum Ansetzen eines Presswerkzeugs nutzbar sind, zwecks Aufschiebens des Pressrings (**3**) auf das Fixierteil (**F**) des Zwischenstücks (**2**), in dem das Anschlussende (**99**) des Rohrstücks (**9**) steckt, so dass die Pressverbindung zwischen dem Fittingbausatz (**1**) und dem Rohrstück (**9**) entsteht.

9. Fittingbausatz (**1**) nach zumindest einem der Ansprüche 1 bis 8, **dadurch gekennzeichnet, dass** im ordnungsgemäss verpressten Zustand zwischen dem Fittingbausatz (**1**), bestehend aus dem Zwischenstück (**2**) und dem Pressring (**3**), mit dem Rohrstück (**9**):
a) das Rastelement (**35**) in die Ausnehmung (**25**) formschlüssig arretiert eingreift;
b) das Kragensegment (**33**) mit seiner Konturfläche (**38**) das Aufliegen des Fortsatzes (**23**) des Zwischenstücks (**2**) auf der Aussenfläche (**91**) des Rohrstücks (**9**) und das Eindringen von Doppelkralle (**230**) und Endkralle (**200**) in die Aussenfläche (**91**) des Rohrstücks (**9**) bewirkt;
c) die Schulterfläche (**26**) und die Prellschulter (**36**) aneinander zu liegen kommen; und
d) die Stossfläche (**90**) des Rohrstücks (**9**) am Anschlag (**29**) ansteht.

10. Fittingbausatz (**1**) nach zumindest einem der Ansprüche 1 bis 9, **dadurch gekennzeichnet, dass** sich der Fittingbausatz (**1**) vormontiert bereitstellen lässt, wobei der Pressring (**3**) soweit auf das Zwischenstück (**2**) aufgeschoben ist, dass das Rastelement (**35**) zumindest partiell auf der Aussenfläche des Ringsegments (**24**) und mit Abstand zur Ausnehmung (**25**) aufsitzt.
